# FASCICULE DE BREVET EUROPEEN

(11) **EP 2 195 135 B1**
(45) Date de publication et mention de la délivrance du brevet: **20.03.2013**
(21) Numéro de dépôt: 08836298.3
(22) Date de dépôt: 10.09.2008
(51) Int. Cl.: B23K 20/12

(54) **PROCEDE DE SOUDAGE DE PIECES PAR FRICTION MALAXAGE UTILISANT UN DISPOSITIF A DOUBLE EPAULEMENT**
SCHWEISSVERFAHREN ZUM REIBRÜHRSCHWEISSEN VON TEILEN UNTER VERWENDUNG EINES DOPPELT GESCHULTERTEN SCHWEISSGERÄT ES
METHOD OF FRICTION STIR WELDING OF PARTS USING A DOUBLE-SHOULDERED WELDING DEVICE

(30) Priorité: 27.09.2007 FR 0757888
(43) Date de publication de la demande: 16.06.2010
(73) Titulaire: European Aeronautic Defence and Space Company EADS France, 75016 Paris (FR)
(72) Inventeur: GUERIN, Baptiste, F-85000 La Roche Sur Yon (FR); ALIAGA, Daniel, F-93300 Aubervilliers (FR); MARIE, François, F-92500 Rueil Malmaison (FR)
(74) Mandataire: Lebrette, Camille
(86) Numéro de dépôt international: PCT/FR2008/051613
(87) Numéro de publication internationale: WO 2009/044077

(56) Documents cités:
- JP-A- 2003 326 376
- JP-A- 2004 114 137
- JP-A- 2004 130 367
- JP-A- 2005 007 466
- US-A1- 2004 134 058
- US-B1- 6 758 382

## Description

L'invention concerne un procédé de soudage par friction malaxage conformément au préambule de la revendication 1 (voir par exemple, US 6 758 382). L'invention trouve des applications dans tout domaine nécessitant de souder bord à bord ou par recouvrement deux pièces qui peuvent être en alliage métallique de toutes sortes, et notamment en alliage d'aluminium. Un tel dispositif de soudage est tout particulièrement adapté au soudage de panneaux de fuselage d'aéronefs, mais également au soudage de panneaux plus épais tels que ceux utilisés au niveau de la voilure ou du caisson central de voilure, ainsi qu'au soudage de tout élément de structure de véhicule spatial, de missile, de véhicule automobile etc.

Un tel dispositif comporte un pion de malaxage destiné à traverser la matière à souder et à la malaxer au fur et à mesure de l'avancement du dispositif de soudage, ainsi qu'un épaulement inférieur et un épaulement supérieur. L'épaulement inférieur est monté fixe sur le pion de malaxage tandis que l'épaulement supérieur est monté en translation le long du pion de malaxage. Il est ainsi possible d'avoir un écartement variable entre les deux épaulements entre lesquels les pièces à souder sont destinées à être logées. Le dispositif de soudage à double épaulement permet de créer un échauffement des deux côtés du joint soudé et donc d'avoir une meilleure répartition thermique. De plus, l'épaulement inférieur reprend la force de pression exercée par l'épaulement supérieur ce qui permet de souder des pièces qui ne sont pas capables de reprendre l'effort de forgeage d'un outil conventionnel ou à pion rétractable.

Actuellement, il existe deux grands modes de pilotage d'un dispositif de soudage à double épaulement pour le soudage de pièces par friction malaxage, à savoir un pilotage à effort contrôlé et un pilotage à écartement contrôlé entre les deux épaulements.

Le pilotage à effort contrôlé, ou en effort, est plus aisé à mettre en oeuvre. Il consiste à appliquer un effort constant entre les deux épaulements du dispositif de soudage. Cependant une telle mise en oeuvre ne permet pas d'avoir un joint soudé d'épaisseur constante et peut conduire à des diminutions importantes d'épaisseur, voir à des effondrements de joint. En effet, si la température de travail entre les épaulements augmente au cours du procédé de soudage, le pilotage en effort tend à provoquer un écrasement excessif de la matière à souder, qui s'accompagne d'un rejet de la matière plastifiée vers l'extérieur du dispositif de soudage. En effet, la résistance du matériau diminuant de plus en plus avec l'accroissement de la température, le maintien d'un effort constant tend à imposer un écrasement de plus en plus important par les épaulements, ce qui provoque un emballement du système. Un tel procédé est donc difficile à maîtriser.

A l'inverse un pilotage à écartement imposé permet de travailler en dimensionnel, de maîtriser l'épaisseur du joint soudé et d'obtenir ainsi un joint de meilleure qualité. Par écartement, on entend la distance entre les deux épaulements du dispositif de soudage. Par écrasement, on entend la différence entre l'épaisseur des pièces à souder et celle du joint soudé, c'est-à-dire la différence entre l'épaisseur des pièces à souder et l'écartement. Des travaux récents ont permis de montrer que pour des tôles de quelques millimètres, on obtient une très bonne qualité de joint soudé en imposant un écrasement de l'ordre de 100µm. Cependant, en fixant l'écartement entre les épaulements, le dispositif de soudage peut être amené à imposer des efforts variables (trop élevés ou insuffisants) sur les pièces à souder car un tel mode de pilotage ne peut prendre en compte de légères variations d'épaisseur des pièces à souder. Il nécessite des moyens de mesure des variations d'épaisseur pour prendre en compte ces variations et permettre une modification de l'écartement entre les deux épaulements.

Dans l'invention, on cherche à fournir un procédé de soudage par friction malaxage à double épaulement permettant de contrôler l'écrasement des pièces à souder et ce, avec un mode de pilotage à effort imposé.

Pour cela, au moins un des deux épaulements du dispositif de soudage est formé de deux couronnes concentriques disposées l'une au-dessus de l'autre, et fixées l'une à l'autre. La couronne de plus petit diamètre est dirigée vers l'intérieur, c'est-à-dire en direction de l'écartement ménagé entre les deux épaulements destinés à recevoir les pièces à souder. Ainsi, la couronne interne est apte à venir au contact des pièces à souder. A l'inverse, la couronne de plus grand diamètre est dirigée vers l'extérieur du dispositif. Les deux couronnes concentriques s'étendent radialement à partir du pion de malaxage du dispositif de soudage. La couronne de plus petit diamètre est destinée à s'enfoncer dans la matière des pièces à souder lors de l'avancement du dispositif de soudage, tandis qu'un anneau externe de la couronne de plus grand diamètre, s'étendant radialement à la périphérie de la couronne de plus petit diamètre, vient en butée sur la matière froide des pièces à souder, de part et d'autre du joint soudé, limitant ainsi l'enfoncement de la couronne de plus petit diamètre dans la matière chaude malaxée par le pion de malaxage au fur et à mesure de l'avancement du dispositif de soudage. La dénivellation entre les deux surfaces portantes de l'épaulement permet de fixer l'écrasement de matière sur la couronne de plus petit diamètre et empêche l'emballement du procédé. Dans la mesure où le pilotage à effort constant est le plus adapté pour la production puisqu'il permet de compenser les imperfections géométriques industrielles telles que les variations d'épaisseur, le dispositif de soudage à double épaulement selon l'invention est avantageusement utilisé pour le soudage par friction malaxage en pilotage en effort. Ainsi, lorsque le dispositif de soudage selon l'invention est utilisé en pilotage à effort constant, la surface d'appui de la couronne de plus grand diamètre fait fonction de butée limitant l'écrasement. Le pilotage à effort constant du dispositif de soudage selon l'invention permet, au final, de travailler à écrasement contrôlé et ceci quelle que soit l'épaisseur des pièces à souder.

Un procédé de soudage par friction malaxage conformément à l'invention est défini dans la revendication 1.

La surface d'appui de la couronne interne est formée par toute la surface de la face interne de la couronne interne, c'est-à-dire de la face destinée à être en contact avec les pièces à souder. La surface d'appui de la couronne externe, elle, est formée par la surface de la face interne de la couronne externe s'étendant radialement vers l'extérieur depuis la périphérie de la couronne interne, dans la mesure où la couronne externe est située au dessus de la couronne interne. Les deux surfaces d'appui sont donc situées l'une au dessus de l'autre et s'étendent parallèlement l'une de l'autre. La surface d'appui de la couronne externe est suffisante pour permettre de stopper l'enfoncement de l'épaulement dans la matière des pièces à souder.

La présence de la couronne externe formant une butée d'enfoncement permet de maîtriser la largeur du joint soudé puisque seule la couronne interne est destinée à s'enfoncer dans la matière des pièces à souder.

Avantageusement l'épaulement inférieur est monté fixe sur une partie basse du pion de malaxage tandis que l'épaulement supérieur est monté en translation en partie haute du pion de malaxage de manière à pouvoir faire varier l'écartement entre les épaulements, notamment en fonction de l'épaisseur des pièces à souder.

La couronne interne a une certaine épaisseur, ou hauteur, permettant de ménager une marche entre les surfaces d'appui de ladite couronne interne et de la couronne externe.

Selon des exemples de mise en oeuvre du procédé de soudage selon l'invention, il est possible de prévoir tout ou partie des caractéristiques supplémentaires suivantes :
- Une distance entre la surface d'appui de la couronne interne et la surface d'appui de la couronne externe correspond au maximum d'enfoncement de l'épaulement souhaité dans la matière des pièces à souder. Ladite distance correspond à la hauteur, ou épaisseur, de la couronne interne, c'est-à-dire à la dimension de la couronne interne s'étendant perpendiculairement à la surface plane de ladite couronne.
- Une distance entre la surface d'appui de la couronne interne et la surface d'appui de la couronne externe est comprise entre 0,5 et 5% de l'épaisseur des pièces à souder. Par épaisseur des pièces à souder, on entend la dimension des pièces s'étendant entre les deux épaulements du dispositif de soudage. L'épaisseur des pièces correspond donc à l'épaisseur de chacune des pièces au niveau de la ligne de jonction dans le cas d'un soudage bord à bord ou à l'épaisseur cumulée des deux pièces dans le cas d'un soudage par recouvrement. On obtient ainsi un écrasement compris entre 0.5 et 5% dans le cas où un seul épaulement du dispositif de soudage comporte deux couronnes concentriques, et un écrasement compris entre 1 et 10% dans le cas où les deux épaulements du dispositif de soudage comportent deux couronnes concentriques.
- La couronne interne a un diamètre externe compris entre 1,2 et 2,5 fois le diamètre externe du pion de malaxage. Le diamètre de la couronne interne correspond à la largeur du joint soudé que l'on obtient en fin de soudage. La largeur du joint soudé est la dimension dudit joint s'étendant transversalement par rapport à l'axe d'avancement du dispositif de soudage. Le diamètre de la couronne interne est tel que l'enfoncement de ladite couronne interne dans la matière est assuré.
- La couronne externe a un diamètre externe compris entre 1,5 et 3,5 fois un diamètre externe du pion de malaxage. La surface d'appui ainsi ménagée est apte à faire butée, pour limiter l'enfoncement de l'épaulement dans la matière à la seule couronne interne.
- La couronne externe peut être munie sur son périmètre externe d'un chanfrein ou d'un congé, présentant respectivement une longueur ou un rayon de 1 à 5 mm. On évite ainsi d'avoir une arête vive au niveau du périmètre externe de la couronne externe, et donc en cours de pilotage du dispositif de soudage de marquer les pièces à souder de part et d'autre du joint soudé lorsque la couronne externe est en appui sur la surface des pièces à souder.
- Au moins un des deux épaulements comporte deux couronnes concentriques, objet de l'invention. Lorsque seul le premier épaulement présente une couronne externe et une couronne interne, le second épaulement comporte une surface lisse. L'effort de pilotage est alors appliqué de sorte que la couronne externe dudit premier épaulement fasse office de butée.
- Lorsque les deux épaulements présentent chacun deux couronnes concentriques objet de l'invention, couronnes internes et externes peuvent avoir des diamètres différents pour chaque épaulement, et ainsi ne pas coïncider.
- L'épaulement inférieur est monté fixe en partie basse du pion de malaxage, l'épaulement supérieur étant monté mobile en translation le long du pion de malaxage, de manière à moduler l'écartement entre les deux épaulements.

Les pièces à souder sont disposées accolées l'une contre l'autre dans le cas où on souhaite réaliser un soudage bord à bord. Le dispositif de soudage est alors déplacé le long des bords accolés pour former le joint soudé. Le joint soudé s'étendra donc le long desdits bords accolés.

Dans le cas d'un soudage par recouvrement, on dispose les pièces l'une au dessus de l'autre. Les épaulements encadrent l'épaisseur cumulée des deux pièces et glissent chacun sur la surface d'une des pièces à souder. Le pion de malaxage traverse l'épaisseur cumulée des deux pièces et malaxe la matière desdites deux pièces.

Avantageusement, on fixe l'écrasement entre 0.5 et 5% de l'épaisseur des pièces à souder.

Avantageusement, on fixe un effort de soudage tel qu'il autorise un écrasement de matière des pièces à souder par la couronne interne d'au moins un des épaulements et bloque tout écrasement supplémentaire de matière dès que la surface d'appui de la couronne externe dudit épaulement vient en appui sur le ou les pièces à souder. Ainsi, lorsque la couronne externe vient au contact des pièces à souder, l'effort reste le même mais l'écrasement n'augmente pas puisque la couronne externe sert de butée d'enfoncement à la couronne interne. La couronne externe a une surface d'appui plus importante que la couronne interne. Ainsi le dispositif de soudage est piloté en effort de sorte que la valeur dudit effort est suffisante pour garantir la pénétration de la couronne interne tout en assurant un appui sans pénétration de la couronne externe.

Par exemple, l'effort de pilotage ramené à la surface d'appui des deux couronnes est inférieur à 20 MPa et ramené à la surface d'appui de la couronne interne est supérieur à 30 MPa.

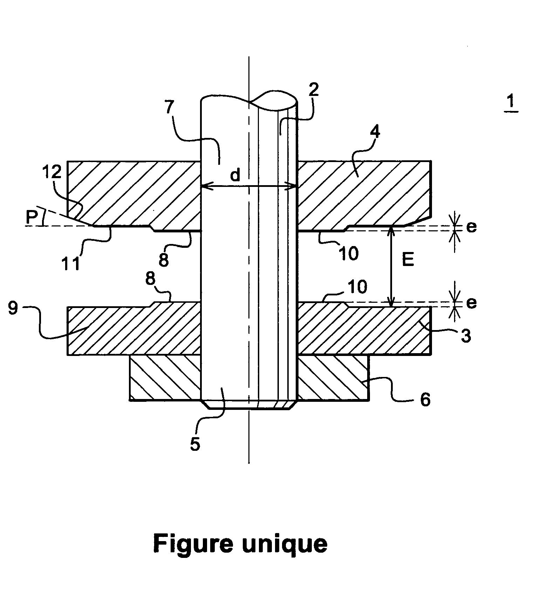

L'invention sera mieux comprise à la lecture de la description qui suit et à l'examen de la figure qui l'accompagne. Celle-ci est-présentée à titre indicatif et nullement limitatif de l'invention.

La figure unique montre une représentation schématique en coupe transversale d'un dispositif de soudage à double épaulement utilisé dans le procédé selon l'invention au niveau de la tête de soudage.

Comme cela est visible sur la figure unique, le dispositif de soudage 1 selon l'invention comporte un pion de malaxage 2 sur lequel sont montés deux épaulements respectivement inférieur 3 et supérieur 4.

L'épaulement inférieur 3 est monté fixe en partie basse 5 du pion de malaxage 2. Une vis 6 forme une butée inférieure pour l'épaulement inférieur 3. L'épaulement inférieur 3 est destiné à se déplacer le long d'une face inférieure des pièces à souder lors du déplacement du dispositif du soudage 1 le long d'un joint soudé desdites pièces à souder. L'épaulement supérieur 4 est monté en translation le long d'une partie haute 7 du pion de malaxage 2. Il est ainsi possible de régler un écartement E entre les épaulements inférieur 3 et supérieur 4.

Dans l'exemple représenté sur la figure unique, chacun des épaulements 3 et 4 est muni de deux couronnes concentriques, respectivement interne 8 et externe 9. Bien entendu, il est possible de prévoir un dispositif de soudage 1 dans lequel un seul des deux épaulements est muni de deux couronnes concentriques.

La couronne interne 8 a un diamètre strictement inférieur à la couronne externe 9. Avantageusement, le diamètre externe de la couronne interne 8 est égal à 1,2 à 2,5 fois le diamètre externe d du pion de malaxage 2, tandis que le diamètre externe de la couronne externe 9 est égal à 1,5 à 3,5 fois le diamètre d du pion de malaxage 2. Une face interne 10 de la couronne interne 8 forme une première surface d'appui, tandis que la face interne 11 de la couronne externe 9 s'étendant radialement depuis la surface d'appui de la couronne interne 8, forme une seconde surface d'appui. Par face interne 10 et 11, on entend les faces des couronnes 8 et 9 d'un des épaulements considérés dirigées vers l'autre épaulement.

La couronne interne 8 a une épaisseur e correspondant au maximum d'écrasement souhaité au niveau des pièces à souder, l'épaisseur e correspondant à la distance séparant la face interne 10 de la couronne interne 8 de la face interne 11 de la couronne externe 9 d'un épaulement 3,4 considéré.

Les couronnes internes 8 des épaulements 3 et 4 sont destinées à s'enfoncer dans la matière des pièces à souder de manière à écraser la matière des pièces à souder de deux fois l'épaisseur e.

Avantageusement, l'angle séparant la surface d'appui interne 10 de la couronne interne 8 et la surface d'appui interne 11 de la couronne externe 9 est sensiblement égale à 90° de manière à autoriser un enfoncement franc de la couronne interne 8 dans la matière et à maîtriser parfaitement la largeur du joint soudé obtenu par le dispositif de soudage 1 selon l'invention. Par largeur du joint soudé, on entend la dimension s'étendant perpendiculairement à l'axe longitudinal dudit joint soudé obtenu. La surface d'appui plane de la couronne externe 9 forme une butée limitant l'enfoncement de l'épaulement correspondant dans la matière des pièces à souder.

Il est possible de prévoir au niveau du périmètre externe de la couronne externe d'au moins un épaulement 4 un chanfrein ou un congé d'arête 12. Le chanfrein ou congé 12 permet de supprimer l'arête vive du bord externe de l'épaulement 4 qui vient au contact des pièces à souder lorsque les couronnes externes 9 des épaulements 3, 4 sont en butée contre les pièces à souder. On évite ainsi que l'épaulement 4 vienne rayer les pièces à souder lors de l'avancement du dispositif de soudage 1 le long du joint soudé. Il est bien évidemment possible de munir les deux couronnes externes 9 des deux épaulements 3 et 4 d'un tel chanfrein 12.

En fixant l'épaisseur e, c'est-à-dire la distance entre les couronnes interne 8 et externe 9 d'un épaulement 3, 4 du dispositif de soudage 1 selon l'invention, on impose un écrasement maximum lors de l'utilisation du dispositif de soudage 1 selon l'invention alors même que ce dispositif peut être avantageusement piloté en effort.

Le dispositif de soudage 1 utilisé dans le procédé selon l'invention permet de souder tous les alliages et notamment les alliages d'aluminium, y compris les alliages à durcissement structural réputés difficilement soudables par les techniques par fusion, dont les alliages au lithium qui présentent des difficultés de soudage par friction malaxage à cause de leur conductivité thermique moindre.

### Exemple 1 : Soudage bord à bord de tôles en alliage d'aluminium lithium 2198T8.

Epaisseur de chacune des pièces E= 2,5mm
Dimensions de chacune des pièces : 1000 x 300mm
Dimensions du dispositif de soudage :
   - diamètre externe du pion de malaxage d = 6mm
   - diamètre externe de la couronne interne = 12mm.
   - diamètre externe de la couronne externe = 18mm
   - épaisseur de la couronne interne e= 0.05mm
   - les deux épaulements sont munis d'une couronne interne et d'une couronne externe

Le dispositif de soudage est piloté en effort, avec un effort = 3 kN, soit 35 MPa.

### Exemple 2 : Soudage bord à bord de pièces en alliage d'aluminium 7449W.

Epaisseur de chacune des pièces E= 15mm.
Dimensions de chacune des pièces : 1000 x 300mm
Dimensions du dispositif de soudage :
   - diamètre externe du pion de malaxage d = 15mm
   - diamètre externe de la couronne interne = 23mm
   - diamètre externe de la couronne externe = 29mm
   - épaisseur de la couronne interne e= 0.1 mm
   - les deux épaulements sont munis d'une couronne interne et d'une couronne externe

Le dispositif de soudage est piloté en effort, avec un effort = 8kN, soit 33.5 MPa.

Plus généralement, l'écartement E est avantageusement compris entre 2 et 20 mm et l'épaisseur e entre 0.05 et 0.2 mm. On évite ainsi que trop de matière soit malaxée entraînant une surchauffe rapide des pièces dans leur ensemble.

## Revendications

1. Procédé de soudage de pièces par friction malaxage, au moyen d'un dispositif de soudage (1) à double épaulement et un pion (2) de malaxage, au moins un épaulement (3, 4) comportant deux disques concentriques (8, 9) respectivement interne et externe, ménageant deux surfaces d'appui concentriques planes (10, 11),
le procédé étant **caractérisé en ce qu'**il comporte les étapes suivantes :
- on dispose les pièces à souder l'une par rapport à l'autre, dans la position où on souhaite les souder, de sorte que le disque interne (8), de plus petit diamètre, et le disque externe (9), de plus grand diamètre, soient disposés de manière à ce que le disque interne (8) soit apte à écraser la matière malaxée des pièces à souder lors de l'avancement du dispositif de soudage (1) et à ce que le disque externe (9) soit apte à former une butée d'enfoncement du disque interne (8) afin de limiter l'enfoncement du disque interne (8) dans la matière malaxée par appui du disque externe (9) sur les pièces à souder de part et d'autre du joint soudé,
- on fixe l'écrasement des pièces à souder en fonction de leur épaisseur
- on déplace le dispositif de soudage (1) le long d'un joint à souder et;
- on pilote le dispositif (1) à effort constant, ledit effort étant fixé de manière à autoriser un écrasement des pièces à souder par le disque interne (8) du ou des épaulements (3, 4) et à bloquer tout écrasement supplémentaire de matière dès que la surface d'appui du disque externe (9) du ou des épaulements (3, 4) vient en appui sur une pièce à souder.

2. Procédé selon la revendication 1, **caractérisé en ce que** les deux épaulements (3, 4) sont munis de deux disques concentriques (8, 9).

3. Procédé selon la revendication 1 ou la revendication 2, **caractérisé en ce qu'**une distance (e) entre la surface d'appui du disque interne (8) et la surface d'appui du disque externe (9) est comprise entre 0,5 et 5% de l'épaisseur des panneaux à souder.

4. Procédé selon l'une des revendications 1 à 3, **caractérisé en ce que** le disque interne (8) a un diamètre externe compris entre 1,2 et 2 fois un diamètre externe du pion de malaxage (2) et **en ce que** le disque externe (9) a un diamètre externe compris entre 1,5 et 3,5 fois un diamètre externe du pion (2) de malaxage.

5. Procédé selon l'une des revendications 1 à 4, **caractérisé en ce qu'**on fixe l'écrasement entre 0.5 et 5% de l'épaisseur des pièces à souder.

6. Procédé selon l'une des revendications 1 à 5, **caractérisé en ce que** l'effort de pilotage ramené à la surface d'appui des deux disques (8, 9) est inférieur à 20 MPa, et ramené à la surface d'appui du disque interne (8) est supérieur à 30MPa.

## Claims

1. Method for welding components by friction stir welding, by means of a double-shoulder welding device (1) and a stirring pin (2), at least one shoulder (3, 4) comprising two concentric discs (8, 9), respectively an internal one and an external one, providing two concentric flat bearing surfaces (10, 11),
said method being **characterized in that** it comprises the following steps:
- the components to be welded are arranged relative to one another in a position in which they are to be welded so that the internal disc (8) having the smaller diameter and the external disc (9) having the larger diameter are arranged in such a way that the internal disc (8) is able to crush the stirred material of the components to be welded during the progression of the welding device (1) and in such a way that the external disc (9) is able to form a penetration stop for the internal disc (8) in order to limit the penetration of the internal disc (8) into the stirred material through bearing of the external disc (9) on the components to be welded on both sides of the welded joint,
- the crushing of the components to be welded is determined according to the thickness thereof,
- the welding device (1) is moved along a joint to be welded and,
- the device is driven with a constant load, said load being determined in such a way that the components to be welded are able to be crushed by the internal disc (8) of the shoulder or shoulders (3, 4) and any further crushing of material is blocked as soon as the bearing surface of the external disc (9) of the shoulder or shoulders (3, 4) bears on a component to be welded.

2. Method according to claim 1, **characterized in that** the two shoulders (3, 4) are provided with two concentric discs (8, 9) .

3. Method according to claim 1 or claim 2, **characterized in that** a distance (e) between the bearing surface of the internal disc (8) and the bearing surface of the external disc (9) is between 0.5 and 5% of the thickness of the panels to be welded.

4. Method according to anyone of the claims 1 to 3, **characterized in that** the internal disc (8) has an external diameter between 1.2 and 2 times an external diameter of the stirring pin (2) and the external disc (9) has an external diameter between 1.5 and 3.5 times an external diameter of the stirring pin (2).

5. Method according to anyone of the claims 1 to 4, **characterized in that** said crushing is determined between 0.5 and 5% of the thickness of the components to be welded.

6. Method according to anyone of the claims 1 to 5, **characterized in that** the driving load relative to the bearing surface of both discs (8, 9) is lower than 20 MPa, and that relative to the bearing surface of the internal disc (8) is higher than 30 MPa.

## Patentansprüche

1. Verfahren zum Schweißen von Werkstücken durch Rührreibschweißen, mittels einer Doppelschulter-Schweißvorrichtung (1) und eines rührenden Stiftes (2), wobei mindestens eine Schulter (3, 4) zwei konzentrische Scheiben (8, 9), eine interne bzw. eine externe Scheibe, enthalten, die zwei konzentrische flache Stützflächen (10, 11) aufweisen,
**dadurch gekennzeichnet, dass** es die folgenden Schritte enthält, bei den:
- die zu schweißende Werkstücke relativ zueinander in einer Stellung angeordnet sind, in der sie geschweißt werden sollen, damit die interne Scheibe (8) mit dem kleineren Durchmesser und die externe Scheibe (9) mit dem größeren Durchmesser so angeordnet werden, dass die interne Scheibe (8) dafür geeignet ist, das gerührte Material der zu schweißenden Werkstücke während der Vorwärtsbewegung der Schweißvorrichtung (1) einzudrücken, und dass die externe Scheibe (9) dafür geeignet ist, einen Eindringanschlag für die interne Scheibe (8) zu bilden, um den Eindring der internen Scheibe (8) in das gerührte Material durch Stützung der externer Scheibe (9) beiderseits der Schweißverbindung auf die zu schweißenden Werkstücke zu begrenzen,
- das Eindrücken der zu schweißenden Werkstücke je nach ihrer Stärke festgestellt wird,
- die Schweißvorrichtung (1) entlang einer Schweißverbindung versetzt wird, und
- die Vorrichtung mit einer konstanten Belastung geführt wird, wobei die genannte Belastung derart festgestellt wird, dass die zu schweißenden Werkstücke durch die interne Scheibe (8) der Schulter oder der Schultern (3, 4) eingedrückt werden, und ein weitere Eindrücken des Materials blockiert wird, sobald die Stützfläche der externen Scheibe (9) der Schulter oder der Schultern auf ein zu schweißendes Werkstück stützt.

2. Verfahren nach Anspruch 1, **dadurch gekennzeichnet, dass** die zwei Schultern (3, 4) mit zwei konzentrischen Scheiben (8, 9) versehen sind.

3. Verfahren nach Anspruch 1 oder Anspruch 2, **dadurch gekennzeichnet, dass** ein Abstand (e) zwischen der Stützfläche der internen Scheibe (8) und der Stützfläche der externen Scheibe (9) zwischen 0,5 und 5% der Stärke der zu schweißenden Platten liegt.

4. Verfahren nach einem der Ansprüche 1 bis 3, **dadurch gekennzeichnet, dass** die interne Scheibe (8) einen externen Durchmesser zwischen 1,2 und 2mal so groß wie ein externer Durchmesser des rührenden Stiftes (2) aufweist, und dass die externe Scheibe (9) einen externen Durchmesser zwischen 1,5 und 3,5mal so groß wie ein externer Durchmesser des rührenden Stiftes (2) aufweist.

5. Verfahren nach einem der Ansprüche 1 bis 4, **dadurch gekennzeichnet, dass** das genannte Eindrücken zwischen 0,5 und 5% der Stärke der zu schweißenden Werkstücke festgestellt wird.

6. Verfahren nach einem der Ansprüche 1 bis 5, **dadurch gekennzeichnet, dass** die Führungsbelastung relativ zur Stützfläche beider Scheiben (8, 9) kleiner als 20 MPa, und relativ zur Stützfläche der internen Scheibe (8) höher als 30 MPa ist.
